# FASCICULE DE BREVET EUROPEEN

(11) **EP 2 141 402 B1**
(45) Date de publication et mention de la délivrance du brevet: **25.06.2014**
(21) Numéro de dépôt: 09163987.2
(22) Date de dépôt: 29.06.2009
(51) Int. Cl.: F16L 37/34, F16L 37/086, F16L 37/248, F16L 37/252

(54) **Elément de raccord à griffes et raccord incorporant un tel élément**
Anschlusselement mit Haken und Anschluss, der mindestens ein solches Element umfasst
Connection element with claws and connection including such an element

(30) Priorité: 30.06.2008 FR 0854410
(43) Date de publication de la demande: 06.01.2010
(73) Titulaire: Staubli Faverges, 74210 Faverges (FR)
(72) Inventeur: Tiberghien, Alain-Christophe, 74320 Sevrier (FR); Durieux, Christophe, 73200 Gilly sur Isère (FR); Marques Barroca, Sérafim, 73460 Frontenex (FR)
(74) Mandataire: Myon, Gérard Jean-Pierre

(56) Documents cités:
- EP-A- 0 374 135
- EP-A- 1 862 719
- DE-U- 6 750 287
- GB-A- 2 109 885
- GB-A- 2 156 023

## Description

La présente invention concerne un élément de raccord et un raccord adapté pour la jonction amovible de deux canalisations.

FR-A-2 901595 divulgue un élément femelle de raccord destiné à recevoir en emmanchement un élément mâle. Cet élément femelle comprend un corps, une bague de verrouillage montée autour du corps et une bague de sécurité superposée sur la bague de verrouillage. Le mouvement de pions de verrouillage en saillie disposés sur l'élément mâle est limité par la bague de sécurité qui est repoussée sur l'avant du corps par un ressort. Une fonction de verrouillage de ces deux éléments est ainsi obtenue de manière fiable.

Toutefois, pour assurer la fonction de sécurité, il est nécessaire de faire coopérer plusieurs pièces. En effet, en plus d'une bague de sécurité massive en acier, ce type d'élément de raccord nécessite un ressort ainsi qu'au moins un ergot permettant de bloquer en rotation la bague de sécurité.

Le but de la présente invention est de prévoir un élément de raccord, disposant de moyens de mise en place et de moyens de sécurisation du verrouillage en emmanchement, capables d'être mis en oeuvre de manière simple.

A cet effet, l'invention a pour objet un élément femelle de raccord adapté pour la jonction amovible de canalisations, ledit élément étant propre à s'emmancher avec un élément mâle selon un axe longitudinal de l'élément, l'élément comprenant :
- un corps,
- une bague de verrouillage solidaire en translation du corps et étant munie d'au moins une rainure, propre à recevoir une partie en saillie radiale du second élément, et d'au moins une encoche de verrouillage, propre à recevoir la partie en saillie dans une configuration où cette partie est verrouillée axialement selon l'axe longitudinal, et
- une bague de sécurité superposée au moins en partie à la bague de verrouillage,
**caractérisé en ce que** la bague de sécurité comprend au moins un organe élastiquement déformable, entre une première configuration dans laquelle l'organe bloque le passage d'une partie en saillie du second élément à partir d'une encoche de verrouillage et une deuxième configuration dans laquelle l'organe autorise ce passage.

Grâce à l'élément selon l'invention, les deux éléments de raccord peuvent être verrouillés de manière fiable l'un par rapport à l'autre, le verrouillage en position connectée étant automatique et simplifié, du fait de la présence de l'organe élastiquement déformable de la bague de sécurité. On obtient ainsi une construction de raccord simplifié dû à la suppression du ressort et des ergots anti-rotation, présents dans un raccord de l'état de la technique.

Selon d'autres caractéristiques avantageuses de l'élément de raccord conforme à l'invention, prises isolément ou selon toutes les combinaisons techniquement possibles :
- l'organe est élastiquement déformable entre la première configuration et la deuxième configuration par déformation radiale ;
- la bague de sécurité est montée à coulissement autour de la bague de verrouillage et la bague de verrouillage est munie d'une surface externe d'appui, propre à être en contact avec au moins une première surface interne du ou de chaque organe élastiquement déformable au cours du passage de cet organe entre la première configuration et la deuxième configuration, et réciproquement, la surface externe d'appui ou la première surface interne étant inclinée en direction d'une embouchure de réception de l'élément de raccord, l'angle d'inclinaison de cette surface par rapport à l'axe longitudinal étant compris entre 30 ° et 60 °, de préférence entre 40 ° et 50 ° ;
- le corps ou la bague de verrouillage est muni d'une butée sur laquelle la bague de sécurité vient en appui dans la deuxième configuration de l'organe élastiquement déformable, la surface externe d'appui étant au contact de la première surface interne lorsque la bague de sécurité est au contact de la butée ;
- une surface interne du ou de chaque organe élastiquement déformable, propre à entrer en contact avec au moins une des parties en saillie radiale lors de son introduction dans la rainure pour la connexion, forme une rampe inclinée en direction opposée de l'embouchure de réception de l'élément de raccord, l'angle d'inclinaison de la surface interne du ou de chaque organe par rapport à l'axe longitudinal est compris entre 30° et 60°, de préférence entre 40° et 50° ;
- le ou chaque organe élastiquement déformable comprend une extrémité au moins partiellement reçue dans la rainure adjacente dans la première configuration de l'organe ;
- lorsque le ou chaque organe élastiquement déformable est dans la première configuration, un rayon maximal défini entre une surface radiale externe de l'extrémité du ou de chaque organe élastiquement déformable et l'axe longitudinal est inférieur ou égal à un rayon maximal défini entre une surface radiale externe de la bague de verrouillage au niveau de la rainure et l'axe longitudinal ;
- la bague de verrouillage comprend deux surfaces de guidage latéral de l'organe élastiquement déformable ;
- la surface de guidage, située à l'opposée de l'encoche de verrouillage vis-à-vis de la rainure, est inclinée par rapport à une direction radiale ;
- les surfaces sont ménagées au niveau d'une gorge disposée dans le prolongement axial d'une embouchure de la rainure ;
- la bague de verrouillage est montée de manière à pouvoir effectuer une rotation autour du corps ; et
- la bague de sécurité est composée en matériau synthétique.

L'invention a également pour objet un raccord pour la jonction amovible de canalisations, comprenant un premier élément de raccord et un second élément de raccord, ces deux éléments étant propres à s'emmancher l'un dans l'autre selon un axe longitudinal du raccord, l'un des deux éléments étant tel que décrit ci-dessus.

L'invention sera mieux comprise à la lecture de la description qui va suivre, donnée uniquement à titre d'exemple non limitatif et fait en se référant aux dessins annexés sur lesquels :
- la figure 1 est une coupe longitudinale d'un élément mâle et d'un élément femelle d'un raccord selon la présente invention, à l'état déconnecté ;
- la figure 2 est une vue de côté du raccord, selon la flèche II à la figure 1, qui indique en I-I le plan de coupe de la figure 1 ;
- la figure 3 est une coupe longitudinale de l'élément mâle et de l'élément femelle du raccord, en cours de connexion ;
- la figure 4 est une vue de côté du raccord, selon la flèche IV à la figure 3, qui indique en III-III le plan de coupe de la figure 3 ;
- la figure 5 est une coupe longitudinale du raccord en configuration emmanchée des éléments mâle et femelle ;
- la figure 6 est une vue de côté du raccord selon la flèche VI à la figure 5, qui indique en V-V le plan de coupe de la figure 5 ;
- la figure 7 est une coupe, selon la ligne VII-VII à la figure 5 ;
- la figure 8 est une vue en perspective du raccord dans la configuration emmanchée des figures 5 à 7 ;
- la figure 9 est une vue en perspective de l'élément mâle du raccord des figures 1 à 8 ;
- la figure 10 est une vue en perspective d'une bague de sécurité de l'élément femelle du raccord des figures 1 à 8 ; et
- la figure 11 est une vue en perspective d'une bague de verrouillage de l'élément femelle du raccord des figures 1 à 8.

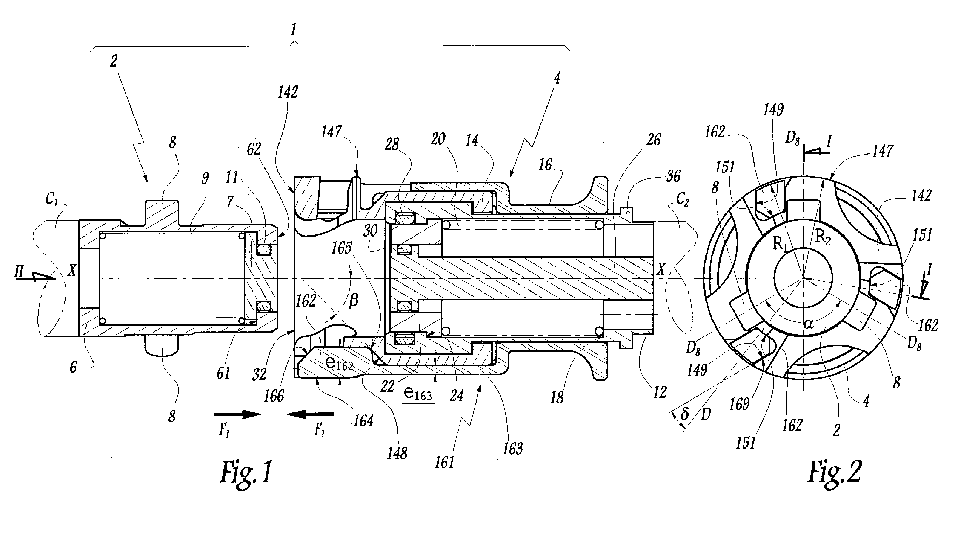

Les figures 1 à 11 représentent un raccord à baïonnette 1, comprenant un élément mâle 2 et un élément femelle 4. Chacun de ces deux éléments 2, 4 est adapté pour la jonction amovible de deux canalisations. A cet effet, chacun de ces deux éléments 2 et 4 comprend une partie arrière respectivement raccordée fluidiquement à une canalisation C₁ ou C₂ représentée, en traits mixtes, uniquement à la figure 1, pour la clarté du dessin. Les deux éléments 2, 4 sont globalement tubulaires et complémentaires l'un de l'autre, de sorte qu'ils sont capables de s'emmancher suivant un axe longitudinal X-X commun à ces deux éléments.

L'élément mâle 2 comprend un corps 6 globalement tubulaire et à section circulaire, qui comporte trois pions de verrouillage 8, qui font chacun saillie radialement vers l'extérieur par rapport au corps 6. Les trois pions de verrouillage sont régulièrement répartis sur la périphérie du corps 6. Ces pions, de géométrie cylindrique, s'étendent donc selon des directions radiales D₈ formant entre elles un angle α de 120° dans la représentation de la figure 2.

Un clapet 7 est monté dans le corps 6 et chargé élastiquement par un ressort 9 en direction d'un siège 61 formé par le corps 6, à proximité de son extrémité avant 62. Par ailleurs, un joint torique 11 assure l'étanchéité entre le clapet 7 et le corps 6 lorsque le clapet est en appui sur le siège 61.

L'élément femelle 4 comprend un corps 12 globalement tubulaire et à section circulaire autour duquel sont montées deux bagues à section circulaire, co-axiales et superposées, à savoir une bague interne de verrouillage 14 et une bague externe de sécurité 16, centrées sur l'axe X-X. La bague de verrouillage 14 est solidaire axialement du corps 12. La bague de sécurité 16 est disposée en partie autour de la bague de verrouillage 14.

Le corps 12 de l'élément femelle 4 définit un épaulement interne 18 permettant l'appui d'un ressort 20 qui exerce un effort élastique sur un clapet 22 de façon à le plaquer sur un siège 24 formé dans le corps 12. L'élément 4 comprend également un poussoir 26 fixe par rapport au corps 12 et en forme de tige allongée centrée sur l'axe X-X. Lorsqu'il est en appui sur son siège 24, le clapet 22 est disposé radialement entre le poussoir 26 et le corps 12. Deux joints toriques 28 et 30, montés respectivement dans le corps 12 et sur le poussoir 26, assurent alors l'étanchéité de la fermeture de l'élément 4.

Les bagues de verrouillage 14 et de sécurité 16 de l'élément femelle 4 sont aptes à tourner, conjointement par rapport au corps 12 autour de l'axe X-X.

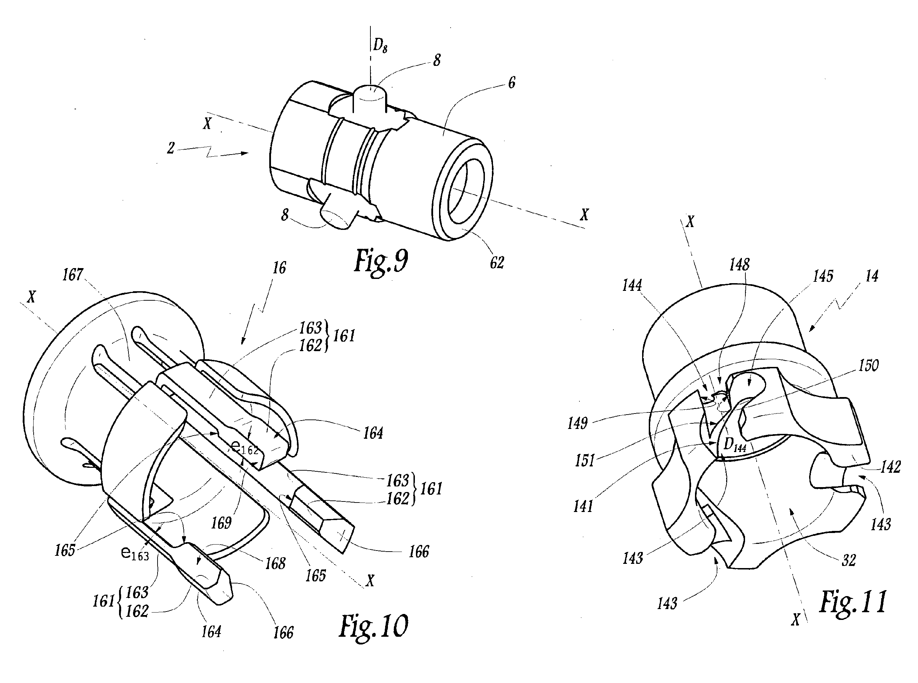

La bague de verrouillage 14 est munie de trois rainures 141, régulièrement réparties autour de l'axe X-X de manière à pouvoir recevoir simultanément les trois pions de verrouillage 8 de l'élément mâle 2. Chaque rainure 141 est débouchante sur l'avant de la bague de verrouillage 14, c'est-à-dire au niveau de sa face avant 142 tournée vers l'élément 2 dans la configuration de la figure 1. Chaque rainure 141 s'étend, sur toute l'épaisseur radiale de la bague de verrouillage 14, à partir d'une embouchure 143 formée dans la face 142, avec une forme incurvée visible à la figure 11. Chaque rainure 141 se termine, à l'opposé de l'embouchure 143, par une encoche de verrouillage 145. La bague de verrouillage 14 comprend une butée 140 limitant le coulissement de la bague de sécurité 16 vers la face avant 142 par rapport à la bague de verrouillage.

Chaque rainure 141 se prolonge, selon une direction D₁₄₄ parallèle à l'axe X-X et en regard de l'embouchure 143, par une gorge 144 axiale qui est ménagée sur une partie seulement de l'épaisseur radiale de la bague de verrouillage 14, sur l'extérieur de cette bague. L'encoche de verrouillage 145 est décalée latéralement par rapport à la gorge 144 et à l'embouchure 143.

La bague de sécurité 16 comprend trois organes ou griffes élastiquement déformables 161. Chaque organe 161 est destiné à être reçu partiellement dans une gorge 144 et dans une rainure 141 de la bague de verrouillage 14 en configurations connectée et déconnectée du raccord.

Chaque organe 161 comprend une extrémité libre massive 162 destinée à obstruer le passage entre l'encoche de verrouillage 145 et l'embouchure 143 dans une rainure 141. On peut noter que l'extrémité 162 est en retrait par rapport à la face avant 142. Ainsi, le pion 8 peut s'engager dans la rainure 141 avant de venir buter sur l'extrémité 162 de l'organe 161. Sa seconde extrémité, solidairement fixée à une portion annulaire 167 de la bague de sécurité 16, est reliée à l'extrémité libre 162 par l'intermédiaire d'une lamelle longitudinale 163 d'épaisseur radiale e₁₆₃ plus faible que l'épaisseur radiale e₁₆₂ de l'extrémité 162. L'organe 161 est préférentiellement une griffe allongée dans la direction X-X de manière à améliorer sa flexibilité, et donc à faciliter sa déformation, lors de l'application de contraintes mécaniques.

Chaque griffe 161 est monobloc avec les parties restantes de la bague de sécurité 16.

Les griffes 161 sont adaptées pour que, en configurations connectée et déconnectée, leurs parties 162 et 163 soient respectivement reçues dans une rainure 141, à proximité de l'embouchure 143, et partiellement dans la gorge 144 qui prolonge cette rainure.

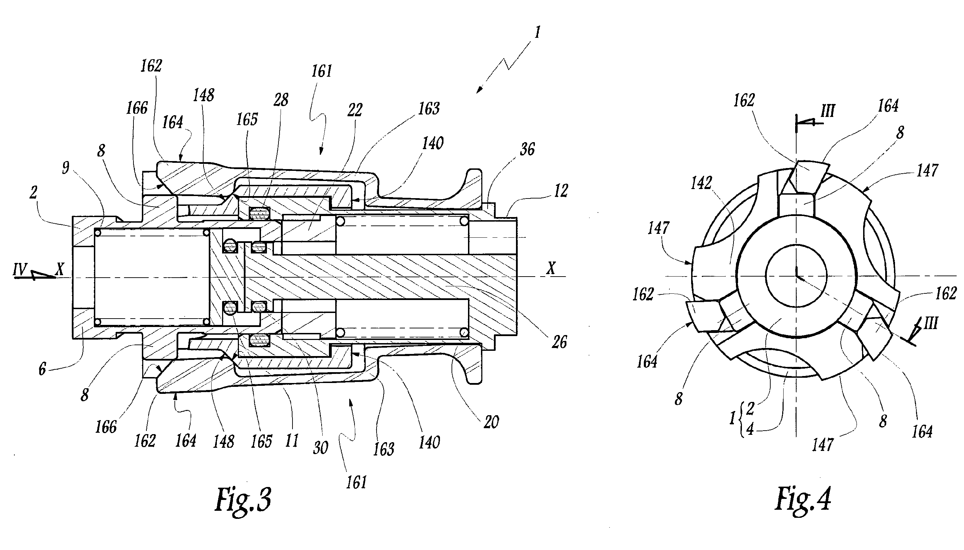

En configuration déconnectée, les éléments mâle 2 et femelle 4 sont disjoints, comme représentés sur les figures 1 et 2. Pour les connecter, l'utilisateur rapproche les deux éléments 2, 4 selon les flèches F₁, dont l'orientation est parallèle à l'axe X-X. Le raccord 1 en est alors amené en configuration en cours de connexion représentée sur les figures 3 et 4. Chaque pion de verrouillage 8 de l'élément mâle 2 est introduit simultanément dans l'embouchure 143 d'une des rainures 141 de la bague de verrouillage 14. Sous l'effet des efforts axiaux dans le sens des flèches F₁, chaque pion de verrouillage progresse axialement dans l'embouchure 143 jusqu'à venir en butée contre l'extrémité libre 162 de la griffe 161. Cette amenée en butée provoque une déformation radiale de l'extrémité libre 162 de la griffe 161. Cette déformation est due au fléchissement élastique de la griffe 161, plus particulièrement de la lamelle 163. Ce fléchissement libère un espace radial pour le passage du pion 8.

Sous l'action des efforts maintenus dans le sens des flèches F₁, les pions de verrouillage 8 poursuivent leur progression dans les rainures 141 sous les extrémités 162 jusqu'à s'engager dans les encoches de verrouillage 145.

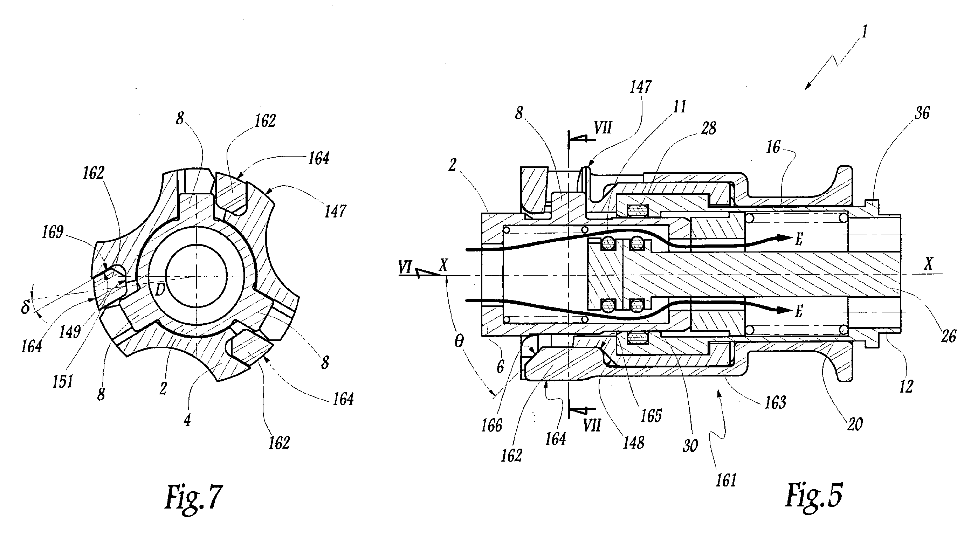

Lorsque les pions 8 parviennent dans les encoches 145, et ne sont plus axialement face à chaque griffe 161, les griffes 161 reviennent élastiquement dans leur configuration initiale. Leur extrémité libre 162 respective se retrouve dans les rainures 141. En effet, le pion 8 adjacent n'exerce plus de contrainte mécanique dans les directions radiale et axiale sur la griffe 161. Cette configuration des griffes 161, représentée sur les figures 5 à 8, correspond sensiblement à la configuration décrite des griffes à l'état déconnecté du raccord 1. La coopération de l'extrémité 162 avec la gorge 144 permet un guidage en rotation de la bague de sécurité 16 par rapport à la bague de verrouillage 14 dans toutes les positions de la griffe 161.

Une fois chaque pion 8 enclavé dans une encoche 145, le raccord 1 est en configuration connectée représentée aux figures 5 à 8, configuration dans laquelle la griffe 161 bloque le passage du pion 8 hors de l'encoche de verrouillage 145 où le pion 8 est verrouillé selon l'axe X-X dans l'élément femelle 4. Les clapets sont mutuellement repoussés. Un fluide peut s'écouler entre les deux canalisations C₁, C₂, raccordées aux deux éléments mâle 2 et femelle 4, comme représenté par les flèches E à la figure 5.

En outre, la bague de verrouillage 14 est munie d'une surface externe d'appui 148 dans l'alignement de l'embouchure 143 de la gorge 144 en contact avec une première surface interne 165 de l'extrémité libre 162 de la griffe 161. Comme représenté sur la figure 3, lorsque l'élément mâle 2 est en train de s'emmancher dans l'élément femelle 4, avec le pion 8 qui progresse dans la rainure 141, la griffe 161 est en appui sur une partie de la surface externe d'appui 148. L'extrémité libre massive 162 recule et glisse le long de la surface externe d'appui 148, ce qui contribue à ce que la griffe 161 se déforme élastiquement au niveau de la lamelle 163. De manière avantageuse, la surface externe d'appui 148 est inclinée en direction d'une embouchure 32 de réception de l'élément femelle 4, destinée à recevoir l'élément mâle 2. Ainsi, la griffe 161 est soumise à une contrainte moindre pour obtenir son fléchissement désiré. De plus, l'angle d'inclinaison β de la surface 148 par rapport à l'axe longitudinal X-X est compris entre 30 ° et 60°, de préférence entre 40 ° et 50°, de préférence encore égal à 45°. En effet, un angle d'inclinaison de 45° constitue un compromis optimal pour faciliter, à la fois, le recul de l'extrémité libre 162 et le retrait de la bague de sécurité 16 par l'opérateur lors de l'étape de déconnexion.

Une deuxième surface radiale interne 166 de l'extrémité libre 162, destinée à entrer en contact avec les pions de verrouillage 8, lorsque les pions 8 s'engagent dans les rainures 141 pour la connexion, forme une rampe inclinée ou un chanfrein dont l'angle d'inclinaison θ par rapport à l'axe longitudinal X-X est compris entre 30° et 60°, de préférence entre 40° et 50°, de préférence encore égal à 45°. La rampe est inclinée en direction opposée de l'embouchure 32. La présence de ce chanfrein favorise le contact avec le pion de verrouillage 8 et facilite ainsi la déformation radiale de la griffe 161 sous la contrainte mécanique du pion pour une connexion automatique.

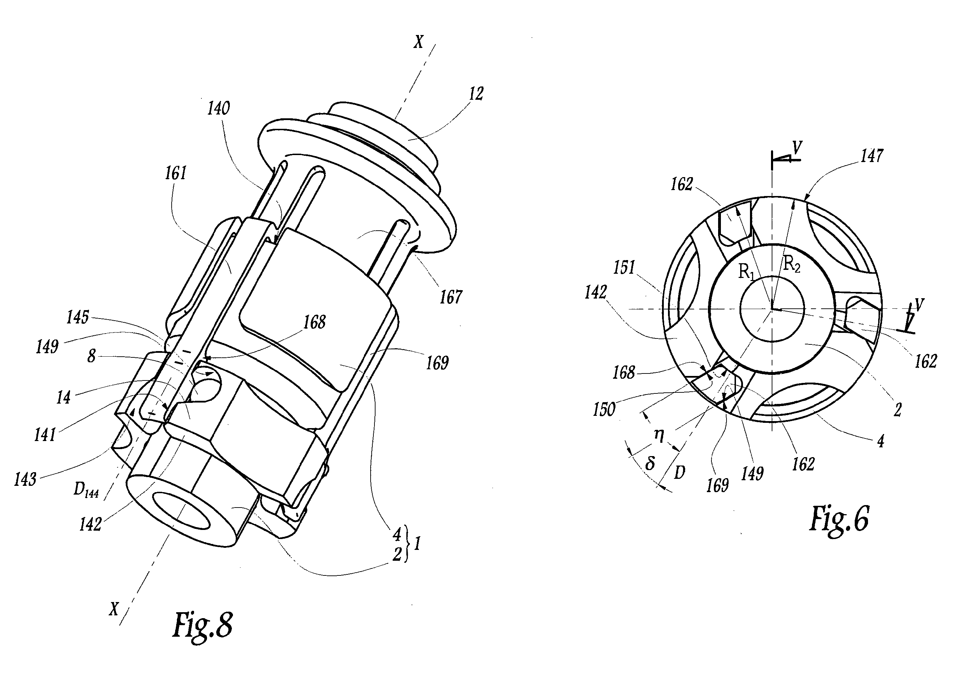

Un rayon R₁, défini entre une surface radiale externe 164 de l'extrémité libre 162 et l'axe longitudinal X-X, lorsque le raccord 1 est dans l'état déconnecté ou connecté, est inférieur à un rayon R₂ défini entre une surface radiale externe 147 de la bague de verrouillage 14 et l'axe X-X. De cette manière, les extrémités libres 162 des griffes 161, en positions connectée/déconnectée sont protégées par la bague de verrouillage 14 et ne risquent pas un endommagement avant leur utilisation ou en cours d'utilisation. En effet, comme représenté sur les figures 2 et 6, l'encombrement radial de la bague de sécurité 16 au niveau des extrémités 162 est inférieur à l'encombrement radial de la bague de verrouillage 14.

Par ailleurs, le corps 12 est muni d'une collerette annulaire externe 36 disposée sur sa périphérie sur une partie opposée à l'embouchure 32. Comme représenté sur la figure 3, en cours de connexion, la bague de sécurité 16 peut reculer par rapport au corps 12 jusqu'à venir en appui sur la collerette 36. Cette collerette 36 forme donc une butée qui permet de s'assurer que la surface externe d'appui 148 est en contact avec l'extrémité 162 de la griffe 161 en position reculée maximale de la bague de sécurité 16. Ainsi, le retour vers les positions connectée et déconnectée de la griffe 161, est automatique et donc garanti.

A titre de variante non représentée, la collerette 36 peut être ménagée sur la bague de verrouillage 14.

La bague de sécurité 16 peut être composée en matériau synthétique. En plus de diminuer la masse de la bague de sécurité, l'utilisation d'un tel matériau rend possible des formes complexes, par thermoformage notamment.

De manière avantageuse, les surfaces latérales 168 et 169 d'une griffe 161 sont parallèles à l'axe X-X. Ces surfaces latérales 168 et 169 sont parallèles aux côtés 149 et 150 de la gorge 144 le long desquels ils s'étendent en partie. Les côtés 149 et 150 forment des surfaces de réception des surfaces latérales 169 et 168 des griffes 161 avec lesquelles elles sont respectivement parallèles. Comme représenté sur les figures 2, 4 et 6, les surfaces latérales 169 et les côtés 149, situés à l'opposé de l'encoche vis-à-vis de la rainure 141, sont inclinés d'un même angle δ par rapport à une direction radiale D passant au milieu du fond 151 d'une gorge 144, c'est-à-dire à mi-distance entre les côtés 149 et 150 au niveau de ce fond. Les surfaces 169 et les côtés 149 s'inclinent vers l'encoche 145 en s'éloignant de l'axe X-X. Les surfaces 168 et les côtés 150 sont également inclinés par rapport à la direction D, selon un angle η. Les surfaces 168 et 169 et les côtés 149 et 150 sont respectivement parallèles entre eux, de sorte que les angle δ et η ont la même valeur. En variante, ces angles peuvent être définis de telle sorte que η soit supérieur à δ de manière à ce que la déformation de la griffe 161 puisse se produire. Les surfaces 168 et les côtés 150 s'inclinent vers l'encoche 145 en s'éloignant de l'axe X-X.

On parle dans ce cas de figure également de déformation radiale même si la déformation de la griffe 161 suit la direction de l'inclinaison des côtés 149 et 150 de la gorge 144, la déformation étant au moins en partie radiale.

Lorsqu'un pion 8 est reçu dans une encoche 145 et que le pion 8 tend à être chassé de cette encoche, le pion vient en appui contre la surface latérale 168 de la griffe 161 adjacente au niveau de son extrémité 162. La griffe 161 ne risque pas de se déformer latéralement de façon significative car elle vient alors en appui, par sa surface latérale 169, contre le côté 149 de la gorge 144. Le côté 149 forme donc une butée empêchant une déformation latérale de la griffe 161. L'inclinaison de la surface 169 et du côté 149 selon l'angle δ concourt à l'effet de blocage recherché. De cette manière, le pion de verrouillage 8 est maintenu de manière optimale dans son encoche 145 correspondante à l'état connecté. En effet, un effort éventuellement exercé par le pion 8 ne provoque pas de fléchissement de la griffe 161. La sécurité de verrouillage est donc renforcée.

Pour procéder à la déconnexion des éléments mâle 2 et femelle 4, la bague de sécurité 16, et plus précisément la portion annulaire 167, est tirée par l'opérateur en direction de la canalisation C₂ jusqu'à venir en appui contre la collerette 36. L'extrémité 162 de la griffe 161 glisse alors par sa surface 165 sur la surface 148, ce qui induit une déformation radiale de la griffe 161. L'extrémité 162 libère le passage pour le pion de verrouillage 8 adjacent. Le pion 8 peut alors se dégager de l'encoche de verrouillage 145 et progresser vers l'embouchure 143 de la rainure 141. Grâce aux efforts exercés par le clapet 22 sur le corps 6, le pion 8 se dégage ensuite de la rainure de verrouillage 141 adjacente. L'angle d'inclinaison β, de préférence égal à 45°, permet par un mouvement unique de l'opérateur sur la bague de sécurité 16 de faire fléchir les extrémités 162.

Quand l'opérateur relâche la bague de sécurité 16 de l'élément femelle 4 déconnecté, les griffes 161 déformées reviennent sur l'avant, dans leur configuration déconnectée de la figure 2, où elle obstrue le passage pour le pion 8 entre l'embouchure 143 et l'encoche 145, et le raccord est prêt pour une nouvelle connexion automatique.

Selon une variante non représentée de l'invention, le nombre de pions de verrouillage 8 n'est pas nécessairement égal à trois. Il peut être prévu un élément mâle muni d'au moins un pion de verrouillage. Si l'élément mâle comprend au moins deux pions de verrouillage, il est avantageux qu'ils soient régulièrement réparti sur toute la périphérie de la surface de l'élément qu'ils équipent. Le nombre et la répartition spatiale des rainures 141, des encoches 145 et des griffes 161 sont adaptés au nombre et à la répartition des pions 8.

En outre, chaque pion de verrouillage 8 peut ne pas être monobloc avec le corps 6, mais rapporté sur ce corps et immobilisé par tout moyen adéquat, tel que le collage ou le soudage par exemple. Par ailleurs, chaque pion de verrouillage n'est pas nécessairement cylindrique.

Selon une autre variante, la surface interne 165 est inclinée préférentiellement d'un angle de 45° en lieu et place de la surface externe d'appui 148, l'orientation de l'inclinaison de la surface interne 165 étant identique à celle décrite pour la surface externe d'appui 148.

De plus, les griffes 161 ne sont pas nécessairement monobloc avec la partie annulaire 167.

Il peut être également prévu que la bague de verrouillage 14 soit solidaire en rotation et en translation avec le corps 12, de sorte que, une fois les deux éléments du raccord connectés, il n'y ait plus possibilité de rotation relative entre ces deux éléments.

A titre de variante non représentée, on peut prévoir une encoche de verrouillage dont la forme permet de verrouiller axialement le pion 8 dans l'élément femelle. A titre d'exemple, l'encoche peut être formée avec des côtés perpendiculaires à l'axe X-X. Dans cette variante, la griffe 161 n'a pas pour fonction de verrouiller axialement le pion dans l'encoche de verrouillage mais permet de maintenir le pion dans l'encoche en cas de mouvement relatif des deux éléments du raccord.

## Revendications

1. Elément femelle de raccord (4) adapté pour la jonction amovible de canalisations (C₁, C₂), ledit élément étant propre à s'emmancher avec un élément mâle (2) selon un axe longitudinal (X-X) de l'élément, l'élément comprenant :
- un corps (12),
- une bague de verrouillage (14) solidaire en translation du corps et étant munie d'au moins une rainure (141), propre à recevoir une partie en saillie radiale (8) du second élément, et d'au moins une encoche de verrouillage (145), propre à recevoir la partie en saillie (8) dans une configuration où cette partie est verrouillée axialement selon l'axe longitudinal, et
- une bague de sécurité (16) superposée au moins en partie à la bague de verrouillage,
**caractérisé en ce que** la bague de sécurité (16) comprend au moins un organe élastiquement déformable (161), entre une première configuration dans laquelle l'organe (161) bloque le passage d'une partie en saillie (8) du second élément (2) à partir d'une encoche de verrouillage (145) et une deuxième configuration dans laquelle l'organe autorise ce passage.

2. Elément de raccord suivant la revendication 1, **caractérisé en ce que** l'organe (161) est élastiquement déformable entre la première configuration et la deuxième configuration par déformation radiale.

3. Elément de raccord suivant la revendication 1 ou 2, **caractérisé en ce que** la bague de sécurité (16) est montée à coulissement autour de la bague de verrouillage (14) et la bague de verrouillage (14) est munie d'une surface externe d'appui (148), propre à être en contact avec au moins une première surface interne (165) du ou de chaque organe élastiquement déformable (161) au cours du passage de cet organe entre la première configuration et la deuxième configuration, et réciproquement, la surface externe d'appui (148) ou la première surface interne (165) étant inclinée en direction d'une embouchure (32) de réception de l'élément de raccord (4), l'angle d'inclinaison (β) de cette surface par rapport à l'axe longitudinal (X-X) étant compris entre 30° et 60°, de préférence entre 40° et 50°.

4. Elément de raccord suivant la revendication 3, **caractérisé en ce que** le corps (12) ou la bague de verrouillage (14) est muni d'une butée (36) sur laquelle la bague de sécurité (16) vient en appui dans la deuxième configuration de l'organe élastiquement déformable (161), la surface externe d'appui (148) étant au contact de la première surface interne (165) lorsque la bague de sécurité est au contact de la butée.

5. Elément de raccord suivant l'une quelconque des revendications précédentes, **caractérisé en ce qu'**une surface interne (166) du ou de chaque organe élastiquement déformable (161), propre à entrer en contact avec au moins une des parties en saillie radiale (8) lors de son introduction dans la rainure (141) pour la connexion, forme une rampe inclinée en direction opposée de l'embouchure (32) de réception de l'élément de raccord (4), l'angle d'inclinaison (θ) de la surface interne (166) du ou de chaque organe (161) par rapport à l'axe longitudinal (X-X) est compris entre 30° et 60 °, de préférence entre 40° et 50 °.

6. Elément de raccord suivant l'une quelconque des revendications précédentes, **caractérisé en ce que** le ou chaque organe élastiquement déformable (161) comprend une extrémité (162) au moins partiellement reçue dans la rainure (141) adjacente dans la première configuration de l'organe (161).

7. Elément de raccord suivant la revendication 6, **caractérisé en ce que**, lorsque le ou chaque organe élastiquement déformable (161) est dans la première configuration, un rayon maximal (R₁) défini entre une surface radiale externe (164) de l'extrémité (162) du ou de chaque organe élastiquement déformable (161) et l'axe longitudinal (X-X) est inférieur ou égal à un rayon maximal (R₂) défini entre une surface radiale externe (147) de la bague de verrouillage (14) au niveau de la rainure (141) et l'axe longitudinal (X-X).

8. Elément de raccord selon l'une quelconque des revendications précédentes, **caractérisé en ce que** la bague de verrouillage (14) comprend deux surfaces (149, 150) de guidage latéral de l'organe élastiquement déformable (161).

9. Elément de raccord suivant la revendication 8, **caractérisé en ce que** la surface (149) de guidage, située à l'opposée de l'encoche de verrouillage (145) vis-à-vis de la rainure (141), est inclinée (δ) par rapport à une direction radiale (D).

10. Elément de raccord suivant la revendication 8, **caractérisé en ce que** les surfaces (149, 150) sont ménagées au niveau d'une gorge (144) disposée dans le prolongement axial d'une embouchure (143) de la rainure (141).

11. Elément de raccord suivant l'une quelconque des revendications précédentes, **caractérisé en ce que** la bague de verrouillage (14) est montée de manière à pouvoir effectuer une rotation autour du corps (12).

12. Elément de raccord suivant l'une quelconque des revendications précédentes, **caractérisé en ce que** la bague de sécurité (16) est composée en matériau synthétique.

13. Raccord (1) pour la jonction amovible des canalisations (C₁, C₂), comprenant un premier élément de raccord (2) et un second élément (4) de raccord, les deux éléments étant propres à s'emmancher l'un dans l'autre selon un axe longitudinal (X-X) du raccord, **caractérisé en ce que** l'un (4) des deux éléments est selon l'une quelconque des revendications précédentes.

## Patentansprüche

1. Kupplungsaufnahmeelement (4), das für die lösbare Verbindung von Leitungen (C₁, C₂) angepasst ist, wobei das Element geeignet ist, mit einem Einsteckelement (2) gemäß einer Längsachse (X-X) des Elementes in Eingriff zu treten, wobei das Element umfasst:
- einen Körper (12),
- einen Verriegelungsring (14), der translatorisch mit dem Körper verbunden ist und mit mindestens einer Nut (141), die geeignet ist, ein radial hervorspringendes Teil (8) des zweiten Elementes aufzunehmen, und mindestens einem Verriegelungseinschnitt (145) ausgerüstet ist, der geeignet ist, das hervorspringende Teil (8) in einer Konfiguration aufzunehmen, in der dieses Teil axial gemäß der Längsachse verriegelt ist, und
- einen Sicherheitsring (16), der zumindest teilweise den Verriegelungsring überdeckt,
**dadurch gekennzeichnet,**
**dass** der Sicherheitsring (16) mindestens ein elastisches Organ (161) umfasst, das zwischen einer ersten Konfiguration, in der das Organ (161) den Durchgang eines hervorspringenden Teils (8) des zweiten Elementes (2) aus einem Verriegelungseinschnitt (145) blockiert und einer zweiten Konfiguration, in der das Organ diesen Durchgang gestattet, verformbar ist.

2. Kupplungselement nach Anspruch 1, **dadurch gekennzeichnet, dass** das Organ (161) elastisch zwischen der ersten Konfiguration und der zweiten Konfiguration durch radiale Verformung verformbar ist.

3. Kupplungselement nach Anspruch 1 oder 2, **dadurch gekennzeichnet, dass** der Sicherheitsring (16) gleitend um den Verriegelungsring (14) montiert ist und der Verriegelungsring (14) mit einer äußeren Auflagefläche (148) ausgerüstet ist, die geeignet ist, in Kontakt mit mindestens einer ersten inneren Fläche (165) des oder jedes elastisch verformbaren Organs (161) während des Überganges dieses Organs zwischen der ersten Konfiguration und der zweiten Konfiguration und wechselseitig die äußere Auflagefläche (148) oder die erste innere Fläche (165) in Richtung einer Mündung für die Aufnahme des Kupplungselementes (4) geneigt ist, wobei der Neigungswinkel (β) dieser fläche in Bezug auf die Längsachse (X-X) zwischen 30° und 60°, vorzugsweise zwischen 40° und 50° liegt.

4. Kupplungselement nach Anspruch 3 ,**dadurch gekennzeichnet, dass** der Körper (12) oder der Verriegelungsring (14) mit einem Anschlag (36) ausgerüstet ist, an dem der Sicherheitsring (16) in der zweiten Konfiguration des elastisch verformbaren Organs (161) in Anlage kommt, wobei die äußere Auflagefläche (148) in Kontakt mit der ersten inneren Fläche (165) ist, wenn der Sicherheitsring in Kontakt mit dem Anschlag ist.

5. Kupplungselement nach einem beliebigen der vorhergehenden Ansprüche, **dadurch gekennzeichnet, dass** eine Innenfläche (166) des oder jedes elastisch verformbaren Organs (161), das geeignet ist, mit mindestens einem der radial hervorspringenden Teile (8) bei seiner Einführung in die Nut (141) für die Verbindung in Kontakt zu treten, eine geneigte Rampe in entgegengesetzter Richtung zu der Mündung (32) zur Aufnahme des Kupplungselementes (4) bildet, wobei der Neigungswlnkei (θ) der Innenfläche (166) des oder jedes Organs (161) in Bezug auf die Längsachse (X-X) zwischen 30° und 60°, vorzugsweise 40° und 50° liegt.

6. Kupplungselement nach einem beliebigen der vorhergehenden Ansprüche, **dadurch gekennzeichnet, dass** das oder jedes elastisch verformbares Organ (161) ein Ende (162) umfasst, das mindestens teilweise in der ersten Konfiguration des Organs (161) in der angrenzenden Nut (141) aufgenommen ist.

7. Kupplungselement nach Anspruch 6, **dadurch gekennzeichnet, dass**, wenn das oder jedes elastisch verformbare Element (161) in der ersten Konfiguration ist, ein maximaler Radius (R₁), der zwischen einer radial äußeren Fläche (164) des Endes (162) des oder jedes elastisch verformbaren Organs (161) und der Längsachse (X-X) definiert ist, kleiner oder gleich als ein maximaler Radius (R₂) ist, der zwischen einer radial äußeren Fläche (147) des Verriegelungsringes (14) an der Nut (141) und der Längsachse (X-X) definiert ist.

8. Kupplungselement nach einem beliebigen der vorhergehenden Ansprüche, **dadurch gekennzeichnet, dass** der Verriegelungsring (14) zwei Flächen (149, 150) zur seitlichen Führung des elastisch verformbaren Organs (161) umfasst.

9. Kupplungselement nach Anspruch 8, **dadurch gekennzeichnet, dass** die Führungsfläche (149), die entgegengesetzt zum Verriegelungseinschnitt (145) gegenüber der Nut (141) angeordnet ist, in Bezug auf eine radiale Richtung (D) geneigt (δ) ist.

10. Kupplungselement nach Anspruch 8, **dadurch gekennzeichnet, dass** die Flächen (149, 150) an einer Nut (144) eingearbeitet sind, die in der axialen Verlängerung einer Mündung (143) der Nut (141) angeordnet ist.

11. Kupplungselement nach einem beliebigen der vorhergehenden Ansprüche, **dadurch gekennzeichnet, dass** der Verriegefungsring (14) in der Weise montiert ist, dass er eine Drehung um den Körper (12) ausüben kann.

12. Kupplungselement nach einem beliebigen der vorhergehenden Ansprüche, **dadurch gekennzeichnet, dass** der Sicherheitsring (16) eine Komponente aus Kunststoff ist.

13. Kupplung (1) für die lösbare Verbindung von Leitungen (C₁, C₂), die ein erstes Kupplungselemente (2) und ein zweites Kupplungselement (4) aufweist, wobei die zwei Elemente geeignet sind, gemäß einer Längsachse (X-X) der Kupplung ineinander zu greifen, **dadurch gekennzeichnet, dass** eines (4) der zwei Elemente ein Element nach einem beliebigen der vorhergehenden Ansprüche ist.

## Claims

1. A female coupling element (4) suitable for releasably joining pipes (C₁, C₂), said element being suitable for receiving a male element (2) along a longitudinal axis (X-X) of the element, the element comprising:
· a body (12);
· a locking ring (14) secured in translation relative to the body and provided with at least one slot (141) suitable for receiving at least one radially-projecting portion (8) of the male element, and at least one locking notch (145) suitable for receiving the projecting portion (8) in a configuration in which said portion is locked axially along the longitudinal axis; and
· a safety ring (16) superposed at least in part on the locking ring;
the female element being **characterized in that** the safety ring (16) includes at least one elastically deformable member (161) that is deformable between a first configuration in which the member (161) prevents a projecting portion (8) of the male element (2) passing out of a locking notch (145), and a second configuration in which the member allows the portion to pass.

2. A coupling element according to claim 1, **characterized in that** the member (161) is elastically deformable between the first configuration and the second configuration by radial deformation.

3. A coupling element according to claim 1 or claim 2, **characterized in that** the safety ring (16) is mounted to slide around the locking ring (14), and the locking ring (14) is provided with an outer bearing surface (148) suitable for coming into contact with at least one first inner surface (165) of the or each elastically deformable member (161) while said member is passing between the first configuration and the second configuration, and vice versa, the outer bearing surface (148) or the first inner surface (165) being inclined towards a receiver mouth (32) of the coupling element (4) at an angle of inclination (β) relative to the longitudinal axis (X-X) lying in the range 30° to 60°, and preferably in the range 40° to 50°.

4. A coupling element according to claim 3, **characterized in that** the body (12) or the locking ring (14) is provided with an abutment (36) against which the safety ring (16) comes to bear in the second configuration of the elastically-deformable member (161), the outer bearing surface (148) being in contact with the first inner surface (165) when the safety ring is in contact with the abutment.

5. A coupling element according to any preceding claim, **characterized in that** the inner surface (166) of the or each elastically-deformable member (161) suitable for coming into contact with at least one of the radially-projecting portions (8) while it is being inserted into the slot (141) for connection, forms a ramp that is inclined in the opposite direction to the receiver mouth (32) of the coupling element (4), the angle of inclination (θ) of the inner surface (166) of the or each member (161) relative to the longitudinal axis (X-X) lying in the range 30° to 60°, and preferably in the range 40° to 50°.

6. A coupling element according to any preceding claim, **characterized in that** the or each elastically-deformable member (161) has an end (162) that is received at least in part in the adjacent slot (141) when the member (161) is in the first configuration.

7. A coupling element according to claim 6, **characterized in that**, when the or each elastically-deformable member (161) is in the first configuration, a maximum radius (R₁) defined between the longitudinal axis (X-X) and a radially-outer surface (164) of the end (162) of the or each elastically-deformable member (161) is less than or equal to a maximum radius (R₂) defined between the longitudinal axis (X-X) and a radially-outer surface (147) of the locking ring (14) in register with the slot (141).

8. A coupling element according to any preceding claim, **characterized in that** the locking ring (14) has two guide surfaces (149, 150) for laterally guiding the elastically-deformable member (161).

9. A coupling element according to claim 8, **characterized in that** the guide surface (149) situated at the side of the slot (141) opposite from the locking notch (145) is inclined (δ) relative to a radial direction (D).

10. A coupling element according to claim 8, **characterized in that** the guide surfaces (149, 150) are formed in register with a groove (144) extending axially from a mouth (143) of the slot (141).

11. A coupling element according to any preceding claim, **characterized in that** the locking ring (14) is mounted so as to be capable of turning around the body (12).

12. A coupling element according to any preceding claim, **characterized in that** the safety ring (16) is made of a synthetic material.

13. A coupling (1) for releasably joining pipes (C₁, C₂), the coupling comprising a first coupling element (2) and a second coupling element (4), the two coupling elements being suitable for engaging one within the other along a longitudinal coupling axis (X-X), the coupling being **characterized in that** one (4) of the two elements is an element according to any preceding claim.
